(19) Europäisches Patentamt

European Patent Office

Office européen des brevets

(11) **EP 0 770 658 B1**

(12) **EUROPEAN PATENT SPECIFICATION**

(45) Date of publication and mention
of the grant of the patent:
**03.04.2002  Bulletin 2002/14**

(51) Int Cl.[7]: **C09K 3/18**

(21) Application number: **96117296.2**

(22) Date of filing: **28.10.1996**

(54) **Antifog film**

Antibeschlagfilm

Film antibuée

(84) Designated Contracting States:
**DE ES FR IT**

(30) Priority: **27.10.1995  JP 28023795**

(43) Date of publication of application:
**02.05.1997  Bulletin 1997/18**

(73) Proprietor: **SUMITOMO CHEMICAL COMPANY, LIMITED**
**Chuo-ku, Osaka 305 (JP)**

(72) Inventors:
 • **Fujita, Tsutomu**
 **Toyonaka-shi (JP)**
 • **Sakaya, Taiichi**
 **Takatsuki-shi (JP)**
 • **Nakanishi, Mitsuko**
 **Osaka-shi (JP)**

(74) Representative: **VOSSIUS & PARTNER**
**Siebertstrasse 4**
**81675 München (DE)**

(56) References cited:
 **EP-A- 0 052 427       EP-A- 0 437 902**
 **EP-A- 0 732 387**

**Description**

The present invention relates to an antifog film excellent in scratch resistance and antifog property after aging at high temperature (more than 70°C).

Transparent materials which have hitherto been used for covering agricultural houses and tunnels are predominantly resin materials and glass. However, when the surface temperature of such covering transparent materials becomes below the dew point of the existing environment, dew condensation takes place to make the surface fogged. When the surface is fogged, the transparency of the material is impaired and the transmission of sunlight is decreased to slow down the growth of crop plants; in addition, the waterdrops adhered to the film will fall onto the crop plant and may cause diseases of the plant. Moreover, the falling drops will wet the clothes of workers operating in the house or tunnel and give them unpleasant feeling.

In the case of resin materials, a generally used method for imparting antifog property to the surface is to use a covering film prepared from a composition obtained by preliminarily adding a surfactant to the resin, whereby antifog property is exhibited as the result of bleeding of the surfactant to the film surface.

On the other hand, methods have been studied which comprise applying an antifog coating onto the covering film to attain antifog property, and various attempts have been made along this line.

In the aforesaid method of adding surfactants to resin, however, when the surfactant which has bled to the surface is washed away by adherent water, the added surfactant is not utilized effectively and resultantly, sufficient duration of the antifogging effect can be hardly expected. Particularly when the film is exposed to high temperatures, as in use in summer, the bleeding of the surfactant in the film is promoted, so that duration of the effect over two or more years cannot be expected with certainty.

On the other hand, in the previously attempted methods of applying an antifog coating film to attain antifog property, the coating film and the base film are apt to peel apart from each other, so that the coating film tends to peel off during use, resulting in loss of antifog property; moreover, when the coated film is spread over an agricultural house, the coating film is apt to be scratched, and the whitening due to scratches causes lowering of transparency and decrease of transmittance of sunlight, or the coating film peels off to cause lowering of antifog property at the beginning of use of the film.

Examples of antifog films and coating are disclosed e.g. in EP-A-52 427 and EP-A-437 902.

The object of the present invention is to provide an antifog film which retains its antifog property over a long period and can be favorably used as the covering film of agricultural houses and tunnels.

This object has been achieved by an antifog film having multilayer structure, comprising

(a) a base film consisting essentially of at least one thermoplastic resin,
(b) at least one layer consisting essentially of at least one inorganic colloid (said layer being hereinafter sometimes referred to as "inorganic colloid layer"), and
(c) at least one layer consisting essentially of at least one hydrophilic resin having a strongly hydrophilic polar group in the molecule (said layer being hereinafter sometimes referred to as "hydrophilic resin layer"),

the inorganic colloid layer (b) and the hydrophilic resin layer (c) being arranged at least on the same side of the base film (a) and the hydrophilic resin layer(s) (c) being arranged as the outermost layer(s) of the side, wherein the layer (b) as well as the layer (c) have a dry weight thickness of from 0.01 to 10 $g/m^2$ and wherein the ratio of the thickness ($d_2$) of the layer (b) to the thickness ($d_1$) of the layer (c), $d_2/d_1$, falls within the range of from 0.1:1 to 10:1.

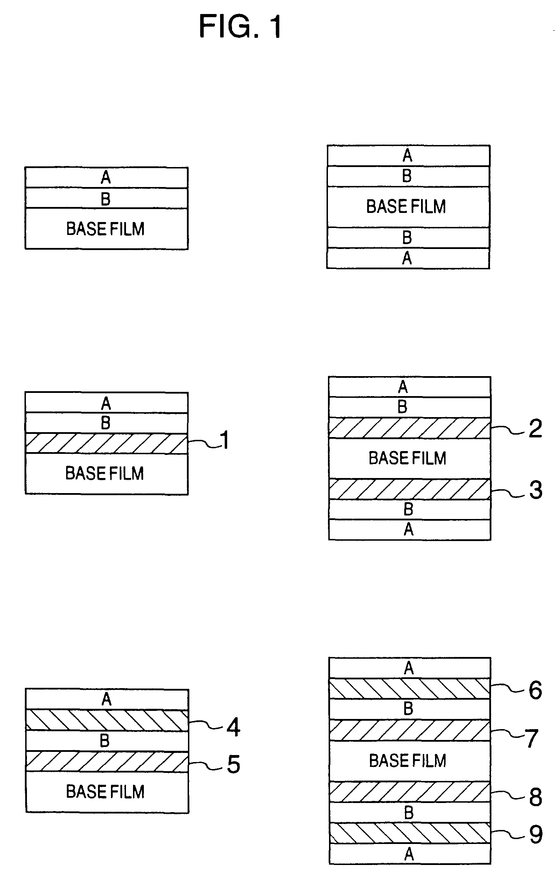

Fig. 1 is a schematic drawing showing the structure of the antifog film of the present invention.

In Fig. 1, A denotes a hydrophilic resin layer (c), B denotes an inorganic colloid layer (b) and 1-9 denote the other layers, such as an anchor coat layer and an adhesive layer.

The present invention is described in detail below.

The inorganic colloid used in the present invention refers to inorganic compounds capable of dispersing in the form of colloid in a dispersion medium. The dispersion medium may be, for example, water, methyl alcohol, isopropyl alcohol, n-butyl alcohol, isobutyl alcohol, ethylene glycol and xylene. In particular, inorganic colloids which disperse in the form of colloid in polar solvents, such as water and alcohols, are preferred and, from the viewpoints of environmental problems and production facilities, inorganic colloids which disperse in the form of colloid in water are more preferred.

Examples of such inorganic colloids include metal colloids, oxide colloids, hydroxide colloids, carbonate colloids and sulfate colloids. From the viewpoint of ensuring the transparency of the antifog film obtained, those with a distribution of particle diameters finer than the wavelength of visible light are preferred.

The metal colloids may be, for example, those of gold, palladium, platinum, silver and sulfur. The oxide colloids, hydroxide colloids, carbonate colloids and sulfate colloids may be, for example, oxide colloids, hydroxide colloids, carbonate colloids and sulfate colloids of such metals as silicon, aluminum, zinc, magnesium, calcium, barium, titanium, zirconium, manganese, iron, nickel and tin.

The particle size of colloids preferably used falls within the range of from 5 to 200 nm.

The inorganic colloid may be prepared, for example, by the method described in Gypsum & Lime (No. 211, p. 46 (1987)).

In the present invention, the thickness of the inorganic colloid layer (b) is 0.01 - 10 g/m$^2$ in terms of dry weight thickness to attain good antifog property and transparency. The term "dry weight thickness" herein means the weight per unit area of the layer which has been formed and then dried. When the thickness of the inorganic colloid layer is too thin, the adhesive strength of the layer to the hydrophilic resin layer described later is insufficient. When it is too thick, the antifog film obtained is poor in transparency.

The dry weight thickness is preferably 0.02 - 2 g/m$^2$, more preferably 0.05 - 0.5 m$^2$.

The inorganic colloid layer (b) may contain other ingredients, for example, organic electrolytes, various surfactants and various binders, within limits not deleterious to the object of the present invention.

The surfactant used in the present invention is not particularly limited and may be, for example, metal salts or ammonium salts of carboxylic acids having an alkyl chain of 6-24 carbon atoms, such as sodium caprylate, potassium caprylate, sodium decanoate, sodium caproate, sodium myristate, potassium oleate, tetramethylammonium stearate, sodium stearate, and potassium behenate; metal salts or ammonium salts of sulfonic acids having an alkyl chain of 6-24 carbon atoms, such as sodium octylsulfonate, sodium dodecylsulfonate, sodium dodecylbenzenesulfonate, and ammonium dodecylbenzenesulfonate; metal salts or ammonium salts of phosphoric acid esters having an alkyl chain of 6-24 carbon atoms; metal salts or ammonium salts of boric acid esters having an alkyl chain of 6-24 carbon atoms; fluorine-containing anionic surfactants, such as sodium perfluorodecanoate and sodium perfluorooctylsulfonate; and silicon-containing anionic surfactants having anionic groups in the metal salt of carboxylic acid and polydimethylsiloxane group. Particularly preferred of these are alkali metal salts of carboxylic acids having an alkyl chain of 6-10 carbon atoms.

The binder used in the present invention preferably has a good compatibility with a dispersion medium used. Such binder may be, for example, generally used binder such as acrylic based resin, vinylchloride/ vinyl acetate based resin, polyethylene based resin, vinylchloride based resin, vinylidene chloride based resin, polyurethane based resin, polycarbonate based resin, styrol based resin, vinyl acetate based resin, and unsaturated polyester based resin. Particularly preferably used is acrylic based resin.

The hydrophilic resin used in the present invention is not particularly limited so long as it has a strongly hydrophilic polar group in the molecule.

A strongly hydrophilic polar group means a hydrogen-bonding group and/or ionic group. The hydrophilic resin may preferably a resin having a hydrogen-bonding group and/or ionic group (in a case where the resin contains two or more of these groups, total of these groups) per unit weight of the resin, which is 10% or more, more preferably 25-70%, particularly 30-50%.

The "hydrogen-bonding group" used herein refers to a group having at least one hydrogen atom directly bonded to a hetero atom (i.e., atom other than carbon). Specific examples of the hydrogen-bonding group may include: hydroxyl group, amino group, thiol group, carboxyl group, sulfone group, phosphoric acid group, etc.

On the other hand, the "ionic group" refers to a group having at least one of positive or negative charge, which is localized so as to enable the hydration of a water molecule. Specific examples of the ionic group may include: carboxylate group, sulfonic acid ion group, phosphoric acid ion group, ammonium group, phosphonium group, etc.

Preferred examples of the hydrogen-bonding group or ionic group contained in the hydrophilic resin may include: hydroxyl group, amino group, carboxyl group, sulfonic acid group, carboxylate group, sulfonic acid ion group, ammonium group, etc.

The content of the hydrogen-bonding group or ionic group may preferably be measured, e.e., by utilizing a technique of nuclear magnetic resonance (NMR), such as $^1$H-NMR and $^{13}$C-NMR.

The highly hydrogen-bonding resin usable in the present invention is not particularly limited, as long as it has a highly hydrogen-bonding property as described above. Specific examples thereof may include: polyvinyl alcohol, ethylene-vinyl alcohol copolymer having a vinyl alcohol fraction of not less than 41 mol %; polysaccharide such as hydroxymethyl cellulose, hydroxyethyl cellulose, carboxymethyl cellulose, amylose, amylopectin, pluran, curdlan, xanthan, chitin, chitosan and cellulose; polyacrylic acid, sodium polyacrylate, polybenzenesulfonic acid, sodium polybenzenesulfonate, polyethyleneimine, polyallylamine, ammonium salt thereof, polyvinyl thiol, polyglycerin, etc.

Particularly preferred examples of the hydrophilic resin in the present invention may include: polyvinyl alcohol and/or polysaccharide (or derivatives thereof). In the case an ideal polyvinyl alcohol, i.e., -(CH$_2$CHOH)$_n$-, the weight percent of the OH group as the above-mentioned hydrogen-bonding group is (17/44) $\times$ 100 = about 39%.

Such hydrophilic resins may be, for example, vinyl resins, acrylic resins, polyester resins, epoxy resins, urethane resins, melamine resins, phenol resins, polysaccharides and modified polysaccharides. Particularly preferably used are water-soluble polysaccharides and poly(vinyl alcohol).

The poly(vinyl alcohol) is obtained by the partial hydrolysis or the complete hydrolysis of poly(vinyl acetate). Preferably used is poly(vinyl alcohol) with an average degree of polymerization of 100 - 10,000, preferably 250 - 3,000 and a saponification degree of 50% by mole or more, preferably 70% by mole or more. When the average degree of polymerization is low, the resultant film tends to have a poor durability and water resistance. When the saponification degree is low, also, the film tends to have a low water resistance and antifogging ability. The poly(vinyl alcohol) may be used either alone or as a mixture of two or more kinds thereof.

In the present invention, the thickness of the hydrophilic resin layer (c) is, in terms of dry weight thickness, at least $0.01 \ g/m^2$ from the viewpoints of the antifog property and scratch resistance of the antifog film obtained and preferably not more than $10 \ g/m^2$ from the viewpoint of the blocking property of the film.

The dry weight thickness is more preferably $0.02 - 2 \ g/m^2$, still more preferably $0.05 - 0.5 \ g/m^2$.

The hydrophilic resin layer used in the present invention may contain anti-septics, surfactants, etc. within limits not deleterious to the object of the present invention.

In the present invention, the ratio ($d_2/d_1$) of the thickness ($d_2$) of the inorganic colloid layer to the thickness ($d_1$) of the hydrophilic resin layer falls within the range of from 0.1:1 to 10:1. When the ratio, $d_2/d_1$, is too low, the adhesive strength of the hydrophilic resin layer is insufficient and/or the blocking resistance of the hydrophilic resin layer is insufficient. When $d_2/d_1$ is too high, the transparency and scratch resistance of the antifog film obtained is insufficient. The ratio, $d_2/d_1$, is preferably 0.3 - 5, more preferably 0.5 - 3.

The thermoplastic resin base film used in the present invention usually refers to a product obtained by processing at least one thermoplastic resin into the form of film.

Examples of thermoplastic resins preferably used herein include polyolefin resins; chlorine-containing resins, such as poly(vinyl chloride), vinyl chloride-methyl methacrylate copolymer and poly(vinylidene chloride); polyester resins, such as poly(ethylene terephthalate) and poly(ethylene naphthalate); and fluororesins.

The polyolefin resins may be homopolymers of $\alpha$-olefins and copolymers of $\alpha$-olefins as the main component with different species of monomers and include, for example, polyethylene, polypropylene, ethylene-$\alpha$-olefin copolymers such as ethylene-butene copolymer, ethylene-4-methyl-1-pentene copolymer and ethylene-hexene copolymer, and ethylene-vinyl acetate copolymer, ethylene-acrylic acid copolymer, ethylene-methyl methacrylate copolymer, ethylene-vinyl acetate-methyl methacrylate terpolymer, and ionomer resins.

Particularly preferred of these polyolefin resins are low density polyethylene having a density of $0.935 \ g/cm^3$ or less, ethylene-$\alpha$-olefin copolymer, and ethylene-vinyl acetate copolymer having a vinyl acetate content of 30% by weight or less because they can yield films which as excellent in transparency and flexibility and are inexpensive.

The thermoplastic resin base film (a) used in the present invention may be incorporated with an inorganic compound for the purpose of imparting a good heat retaining property and weather resistance. The inorganic compound used is exemplified by an inorganic compound (1) represented by the formula (1)

$$Li^+(A\ell^{3+})_2(OH)_6 \bullet (A^{n-})_{1/n} \bullet mH_2O \qquad (1)$$

wherein $A^{n-}$ is an n-valent anion and m is a number defined by the equation: $0 \leqq m \leqq 3$.

Such inorganic compounds (1) may be easily synthesized, for example, by the method described in JP-A-5-179052.

The n-valent anion denoted by $A^{n-}$ in the above formula (1) is not particularly limited and may be, for example, such anions as $C\ell^-$, $Br^-$, $I^-$, $NO_3^-$, $C\ell O_4^-$, $SO_4^{2-}$, $CO_3^{2-}$, $SiO_3^{2-}$, $HPO_4^{2-}$, $HBO_4^{4-}$, $PO_4^{3-}$, $Fe(CN)_6^{3-}$, $Fe(CN)_6^{4-}$, $CH_3COO^-$, $C_6H_4(OH)COO^-$, $(COO)_2^{2-}$, terephthalate ion, p-hydroxybenzoate ion and naphthalenesulfonate ion.

Further, the inorganic compound may be various other inorganic compounds, such as compounds of silicic acid, aluminosilicic acid and aluminic acid, and hydrotalcites. The silicic acid compound may be, for example, silicon oxide, magnesium silicate, calcium silicate, aluminum silicate and titanium silicate. The aluminosilicic acid compound may be, for example, sodium aluminosilicate, potassium aluminosilicate and calcium aluminosilicate. The aluminic acid compound may be, for example, alumina, sodium aluminate, potasium aluminate, and calcium aluminate. The hydrotalcites are compounds represented by the formula (2)

$$M^{2+}_{1-x}A\ell_x(OH)_2(A^{n'-})_{x/N} \bullet m'H_2O \qquad (2)$$

wherein $M^{2+}$ is a divalent ion of a metal selected from the group consisting of magnesium, calcium and zinc, $A^{n'}$ is an n'-valent anion, and x and m' are numbers defined by the equations: $0 < x < 0.5$ and $0 \leqq m' \leqq 2$. Specific examples thereof include natural hydrotalcite $Mg_{0.75}A\ell_{0.25}(OH)_2(CO_3)_{0.125} \bullet 5H_2O$ and synthetic hydrotalcite $Mg_{0.69}A\ell_{0.31}(OH)_2(CO_3)_{0.15} \bullet 0.54H_2O$.

Preferred of these inorganic compounds are the inorganic compound (1) and hydrotalcites from the viewpoint of transparency. Specific examples of other inorganic compounds than mentioned above include those which have trade names Fujirain LS and LMA (mfd. by Fuji Kagaku K.K.).

The content of these inorganic compounds, relative to 100 parts by weight of thermoplastic resin, is preferably 0.03 - 25 parts by weight, more preferably 1 - 15 parts by weight, from the viewpoints of heat retaining property, weather resistance and transparency.

The average particle diameter of the inorganic compound is preferably not more than 5 μm, more preferably 0.05 - 2 μm. To improve the dispersibility of the compound into the film, the inorganic compound may be used after being subjected to surface treatment with higher fatty acids, alkali metal salts of higher fatty acids, etc.

The thermoplastic resin base film may be incorporated with a hindered amine type compound and an ultraviolet absorber to improve its weather resistance. The hindered amine type compound refer to 2,2,6,6-tetraalkylpiperidine derivatives having a substituent at the 4-position. The substituent at the 4-position is, for example, a carboxylic acid residue, alkoxy group and alkylamino group. The derivative may also be substituted with an alkyl group at the N-position. The content of these hindered amine type compounds, relative to 100 parts by weight of thermoplastic resin, is preferably 0.02 - 5 parts by weight, more preferably 0.1 - 2 parts by weight. These hindered amine type compounds may be used each alone or in a combination of two or more thereof.

The ultraviolet absorbers may be, for example, those of benzophenone type, benzotriazole type, benzoate type and cyanoacrylate type. The content of these ultraviolet absorbers, relative to 100 parts by weight of thermoplastic resin, is preferably 0.01 - 5 parts by weight, more preferably 0.05 - 1 part by weight. These ultraviolet absorbers may be used each alone or in a combination of two or more thereof.

The thermoplastic resin base film may be incorporated with an antifogging agent. The antifogging agent may be either liquid or solid at room temperature. Examples of solid antifogging agents include nonionic surfactants, for example, sorbitan aliphatic acid ester type surfactants, such as sorbitan monostearate, sorbitan monopalmitate and sorbitan monobehenate; glycerol fatty acid ester type surfactants, such as glycerol monolaurate, glycerol monopalmitate, glycerol monostearate, diglycerol distearate and triglycerol monostearate; polyethylene glycol type surfactants, such as polyethylene glycol monopalmitate and polyethylene glycol monostearate; aducts of alkylphenol with alkylene oxide, and organic acid esters of sorbitan-glycerol condensation products.

Examples of antifogging agents which are liquid at room temperature include glycerol aliphatic acid esters, such as glycerol monooleate, diglycerol monooleate, diglycerol sesquioleate, tetraglycerol monooleate, hexaglycerol monooleate, hexaglycerol pentaoleate, tetraglycerol trioleate, tetraglycerol monolaurate and hexaglycerol monolaurate; and sorbitan aliphatic acid esters, such as sorbitan monooleate, sorbitan dioleate and sorbitan trioleate. These liquid antifogging agents can avoid a phenomenon in which the initial transparency of film immediately after film production is lost owing to bleed out of an antifogging agent to the film surface during film storage.

The content of the solid or liquid antifogging agent, relative to 100 parts by weight of resin, is preferably 0.01 - 10 parts by weight, more preferably 0.1 - 3 parts by weight.

Further, mist preventive agents may be incorporated into the thermoplastic resin film to impart mist preventive property to the film. Examples of such mist preventive agent include fluorine compounds having a perfluoroalkyl group, ω-hydrofluoroalkyl group or the like (particularly fluorine-containing surfactants) and silicone-type compounds having an alkylsiloxane group (particularly silicone-type surfactants). Specific examples of the fluorine-containing surfactant are those which have the trade names Unidyne DS-403, DS-406 and DS-401 (all manufactured by Daikin Kogyo K.K.).

The thermoplastic resin base film may be incorporated with, besides the additives described above, various conventionally used additives, for example, various stabilizers (e.g., light stabilizers as nickel compounds, and antioxidants), antistatic agents, pigments, flame retarders and inorganic compounds. These additives may be used each alone or in a combination of two or more thereof (cf. "Techniques of Separation and Analysis of Polymer Additives" and "Supplement Volume" thereof, edited by Tanaka et al. and published by Nihon Kagaku Joho K.K., 1987, Japan; "Practical handbook on Plastic and Rubber Additives", edited by Goto et al. and published by Kagaku Kogyo K.K., 1970, Japan).

The methods used for processing the thermoplastic resin into film used in the present invention may be any of the conventionally used processing methods and include, for example, inflation and T-die extrusion. The thermoplastic resin used may be either of one kind or a blend of two or more kinds. The film structure may be either single layer structure or multilayer structure. In the case of multilayer structure, various combinations of respective resin layers can be selected according to intended objects. The thickness of the thermoplastic resin film may be selected as desired according to intended properties, e.g., mechanical strength, transparency, flexibility, etc., and is preferably 10 - 400 μm, more preferably 30 - 300 μm.

In general, the surface tension of thermoplastic resin film is mostly low. Therefore, when the inorganic colloid layer is laminated directly onto the thermoplastic resin base film, it is desirable that the surface tension of the surface to be laminated of the film has been increased beforehand. When the lamination is conducted by the coating method described later, the surface tension is preferably not lower than 36 mN/m (dyne/cm) in order to improve the wettability between the inorganic colloid liquid dispersion and the film surface and to obviate defects caused by crawling. The upper limit of the surface tension is not particularly limited and is preferably about 60 mN/m (dyne/cm).

The method for surface treating may be any of the conventionally used methods, for example, the corona treatment, plasma treatment, flame plasma treatment, UV treatment and EB (electron beam) treatment. The surface treatment is conducted under such conditions that the thermoplastic resin film after treatment may have a surface tension of preferably 36 - 60 mN/m (dyne/cm), more preferably 40 - 50 mN/m (dyne/cm).

In general, the effect of the surface treatment decreases with the lapse of time, so that lamination by coating is desirably conducted as quickly as possible after the treatment. Accordingly, the treating step and the coating step are preferably positioned consecutively and in line.

Besides increasing the surface tension by surface treatment, for the purpose of improving wettability, various anchor coating agents may be coated beforehand on the base film surface and then the inorganic colloid layer may be laminated thereon by coating, etc.

The process for producing the antifog film of the present invention is described below.

The process for producing the antifog film of the present invention is not particularly limited so long as it makes it possible to laminate the respective layers onto the film. It may be, for example, the coating method conventionally used (reference is made to "Coating Methods", written by Yuji Harasaki, published by Maki Shoten, 1979).

The "coating" referred to herein is a method which comprises coating a liquid dispersion of an inorganic colloid in a dispersion medium or a solution of a hydrophilic resin in a solvent, and then removing the dispersion medium or the solvent by drying to form a layer. Preferred methods of coating are, for example, gravure coating, dipping and spraying. To attain a good production efficiency, the coating is preferably applied to a tubular film base material.

The dispersion medium used for the liquid dispersion of the inorganic colloid may be, for example, those described before. The solvent used for dissolving the hydrophilic resin is preferably water, an alcohol, or a liquid mixture thereof.

In forming the inorganic colloid layer by coating, a layer of a predetermined dry weight thickness can be obtained by controlling the concentration of the inorganic colloid in the liquid dispersion of the colloid and the amount of the liquid dispersion to be coated per unit area. Further, in case that coating is carried out, for example, by using the microgravure technique which is a kind of the above-mentioned gravure techniques, a layer of a predetermined dry weight thickness can be obtained by selecting a Mesh size of a microgravure roll. The larger Mesh size of a microgravure roll used, the thinner of the thickness. Though the amount of the liquid dispersion is suitably determined according to the area to be coated, at least an amount is necessary which permits uniform coating. Further, in order to improve the coatability of the inorganic colloid liquid dispersion (for example, to prevent crawling of the liquid dispersion or uneven coating), various clay minerals, particularly inorganic layer compounds which swell laminarly in the dispersion medium and exhibit thixotropy, may be added to the liquid dispersion. The clay minerals are classified into a type of 2-layer structure which comprises an octahedral layer having aluminum, magnesium, etc. as the central metal upon a tetrahedral layer of silica, and the other type of 3-layer structure which comprises an octahedral layer having aluminum, magnesium, etc. as the central atom interposed from both sides by tetrahedral layers of silica. Examples of the former type include kaolinites and antigorites. Examples of the latter type include smectites, vermiculites and micas, these differing in the number of interlayer cations.

Specific examples of clay minerals include kaolinite, dickite, nacrite, halloysite, antigorite, chrysotile, pyrophyllite, montmorillonite, hectorite, tetrasilylic mica, sodium teniolite, muscovite, margarite, talc, vermiculite, phlogopite, xanthophyllite and chlorite. Particularly preferred of these are smectite and vermiculites, which is characterized by its aqueous dispersion showing a thixotropic viscosity.

In forming the hydrophilic resin layer by coating, a layer of a predetermined dry weight thickness can be obtained by controlling the concentration of the hydrophilic resin in the hydrophilic resin solution and the amount of the hydrophilic resin solution to be coated per unit area. The amount of the hydrophilic resin solution may also be suitably determined according to the area to be coated, but at least an amount is required which permits uniform coating. The hydrophilic resin solution may be incorporated with a surfactant to improve its coatability. Further, the resin solution may be incorporated with such an inorganic compound as silica to improve the strength of the hydrophilic resin layer and to prevent blocking.

After coating, the coated dispersion or solution is preferably dried as quickly as possible to promote the formation of respective layers. If the antifog film sheets produced are placed one upon another by winding operation or the like while they are not sufficiently dried, the hydrophilic resin layers will stick to each other and resultantly, when the antifog film sheets are peeled from each other at the time of using the hydrophilic resin layer will peel off undesirably.

The layer structure of the antifog film of the present invention should comprise an inorganic colloid layer and a hydrophilic resin layer at least on the same side of a thermoplastic resin film, the hydrophilic resin layer being arranged as the outermost layer, and may further comprise (an)other layer(s) therebetween. For example, the respective layers may be combined so as to form the various layer structures shown in Fig. 1.

When the antifog film of the present invention is used as the exterior covering of agricultural houses, films with better transparency are preferred to take light effectively into the house. The measure of transparency generally used is the total light transmittance and the haze value (diffused light ratio) of film. Film with a higher total light transmittance and lower haze value has a better transparency. Therefore, when the antifog film of the present invention is used as the exterior covering of agricultural houses, films with a total light transmittance of 80% or more, preferably 90% or more, and a haze value of 40% or less, preferably 25% or less, are preferably used.

The antifog film of the present invention comprises an inorganic colloid layer and a hydrophilic resin layer at least on the same side of a thermoplastic resin base film, the hydrophilic resin layer being arranged as the outermost layer. Therefore, the adhesion between the base material and the respective layers is not susceptible to the effect of swelling caused by water absorption and hence is stable over a long period. Since a hydrophilic resin layer is formed as the outermost layer, an excellent initial antifog property due to wetting by water absorption and an abrasion-resistant scratch resistance can be imparted to the film. Since the inorganic colloid layer acts as an underlayer and exhibits an anchor effect, the peeling off of the hydrophilic resin layer can be suppressed and the durability of the film is improved. Even when a part of the hydrophilic resin layer happens to be washed away together with adherent water, the antifog property is not impaired by virtue of the wettability due to the rough surface effect and the polarity of the inorganic colloid layer which has remained as the underlayer. Furthermore, the antifog film of the present invention exhibits an excellent heat-resistant antifog property.

When the thermoplastic resin base film is corona-treated and then coated with the inorganic colloid liquid dispersion, since the surface tension of the base film is high, the coatability of the liquid dispersion is improved and the dispersion can be easily coated uniformly with no unevenness. Further, the adhesive strength of the coated film after drying is also improved.

When the antifog film of the present invention is used, for example, as the exterior covering of an agricultural house and when the film is spread such that the hydrophilic resin layer may face the inside of the agricultural house, the film, even under conditions of high humidity, does not cause troubles of the inner face of the film being clouded by water droplets and of waterdrops falling down to damage crop plants. Moreover, since waterdrops flow down rapidly, the film dries rapidly and the humidity inside the house is kept low, and consequently the development of diseases of crops can be suppressed. Moreover, the antifog film of the present invention can suppress the development of mist; resultantly the transmission of sunlight into the house is not prevented by mist, the adhesion of waterdrops to crop plants is avoided, and the development of diseases of plants can be suppressed.

Further, in the present invention, when the thermoplastic resin base film is incorporated with the inorganic compound, the resultant antifog film is excellent in heat retaining property, showing a heat retaining index described later of 65% or more, because the inorganic compound absorbs the heat in the house and prevents its dissipation to the outside. The antifog film of the present invention can be used as a package film or a window-applied film as well as for agricultural field.

EXAMPLES

The present invention is described in detail below with reference to Examples, but the invention is not limited thereto. The test methods used in Examples are as follows.

Coatability test:

By using a coater of microgravure type (mesh R 90), the wettability of each liquid at a line speed of 20 m/min was evaluated.

  ○ : The liquid can be evenly coated with no crawling.
  △ : Some crawling occurs and uncoated parts develop in places.
  × : The liquid is completely repelled and cannot adhere to the film.

Antifog property test:

A sheet of film was sticked with double-coated adhesive tape to an acrylic frame 34 cm in length and 5 cm in width, and was set, with the test surface downward and with an inclination of 15 degrees to the horizontal plane, upon a constant temperature water bath placed in an environmental test chamber of constant temperature. The temperature conditions of (environmental test room/constant temperature water bath) in the test was 20°C/40°C. The state of waterdrops on the film surface after the lapse of one month was observed and the results were judged according to the following criterion.

  ○ : The film surface is wet uniformly.
  △ : Waterdrops adhere to the film surface partly.
  × : Waterdrops adhere to the whole surface and the film is clouded in white.

Scratch resistance test:

On a film sheet with its coated surface facing upward were placed a jig wound with cloth and a metal roll with a contact area of 10 $cm^2$, then a load of 540 g was applied, and the film sheet was moved backward and forward 10 times to effect rubbing. Thereafter the scratch of the coating film was observed.

○: No scratch
△: Slightly Slightly scratched in streaks
×: The whole surface of the rubbed part is scratched to undergo whitening.

Coating film adhesion test:

A cellophane tape (1.8 mm width, mfd. by Sekisui Ltd.) was sticked onto the coating surface by means of a hand roller, and then peeled off to a direction of 90 degrees at a velocity of 300 mm/min by using an Autograph (Shimadzu AGS 100, a trade name, load cell 5 kg) to determine adhesive strength.

Heat retaining property test:

The transmittance of film in the range from 330 $cm^{-1}$ to 4400 $cm^{-1}$ was determined by using an infrared spectrophotometer (1640 Type FTIR, mfd. by Perkin-Elmer Corp.). The IR absorbance was measured and calculated according to the following definition of a radiation absorbing energy and the measuring method.

A radiation absorbing energy of the film at 27°C was measured and then its ratio to the black-body radiation energy (which is 100%) was calculated.

With an absorbance of a sample at the absolute temperature of 300K being $A_{\lambda \cdot T}$, a radiation absorbing energy $E_{\lambda \cdot T}$ of the sample in the wavelength range between 2.27 and 30.3 μm was calculated according to the following equation:

$$\mathtt{Equation}$$

$$E_{\lambda \cdot T} = \int_{2.27}^{30.3} A_{\lambda \cdot T} \cdot J_{\lambda \cdot T} \cdot d\lambda \, (W/cm^3 \cdot \mathtt{deg.})$$

wherein $J_{\lambda \cdot T}$ is a distribution of intensities of the black-body radiation which follows the Planck's law of radiation. $J_{\lambda \cdot T}$ is expressed as follows:

$$J_{\lambda \cdot T} = (C_1/\lambda^5)(e^{c_2/\lambda \cdot T} - 1)^{-1}$$

wherein

$C_1 = 3.7402 \times 10^{-12} \, (W/cm^2)$
$C_2 = 1.43848 \, (cm \cdot deg)$
$\lambda$ = wavelength (cm)
$T$ = absolute temperature, 300K.

An absorbance $A_{\lambda \cdot T}$ of the sample was calculated from the IR spectrum which was measured with a IR spectrophotometer at 300K according to the following equation:

$$A_{\lambda \cdot T} = 1 - J_\lambda/J_{0\lambda}$$

wherein $J_{0\lambda}$ is an energy of incident light, and $J_\lambda$ is an energy of transmitted light.

The radiation absorbing energies were integrated in the range between 2.27 μm and 30.3 μm with an interval of 0.02 μm.

The IR spectrum was measured by a conventional method using a Fourier transofrmation type IR spectrophotometer. The proportion (%) of absorption due to the film in the black body radiation region was determined from the peak area and was used as the measure for heat retaining property. Thus, it can be said that the larger the proportion of absorption due to the film, the better the heat retaining property of the film. Antifog property (after aging at high temperature) test:

A film sample was heat-treated for 3 minutes in an oven at 80°C. Thereafter, according to the method of antifog property test, the state of waterdrops on the film surface after the lapse of one day was observed, and the results were evaluated according to the following criterion.

○: The film surface is wet uniformly.

Δ: Waterdrops adhere to the surface partly.

×: Waterdrops adhere to the whole surface and the film is clouded in white.

Example 1

Base film (1): Inflation film of low density polyethylene (50 μm thick)

Inorganic colloid liquid dispersion (1): To 100 parts by weight of water were added 3 parts by weight of colloidal alumina, 0.8 part by weight of colloidal silica A, 0.015 part by weight of sodium caprylate as an anionic surfactant, 0.002 part by weight of sodium p-toluenesulfonate as an organic electrolyte and further 0.03 part by weight of Sumecton SA as an inorganic layer compound. The resulting mixture was referred to as "inorganic colloid liquid dispersion (1)".

Hydrophilic resin solution (1): To 100 parts by weight of water was added 1% by weight of poly(vinyl alcohol) (PVA 217, a trade name, mfd. by Kuraray) and the mixture was heated at 95°C to form a solution. The solution was referred to as "hydrophilic resin solution (1)".

Corona treatment: The film surface was treated with a corona treating apparatus (mfd. by Sherman Ltd.) to attain a surface tension of 54 mN/m (dyne/cm).

Coating: By using the microgravure technique (using a microgravure roll having 163 μm grid (90 Mesh), first the inorganic colloid liquid dispersion (1) was coated on the base film (1) so as to be about 8 g/m$^2$ of the coating amount (content), at a line speed of 20 m/min and a drier temperature of 90°C. Then, on the inorganic colloid coating film thus formed was coated the hydrophilic resin solution (1) in the same manner as described above. The film thus obtained was evaluated and the results are shown in Table 1.

Example 2

Inorganic colloid liquid dispersion (2): To 100 parts by weight of water were added 7.5 parts by weight of colloidal alumina, 2 parts by weight of colloidal silica A, 0.0375 part by weight of sodium caprylate as an anionic surfactant, 0.005 part by weight of sodium p-toluenesulfonate as an organic electrolyte and further 0.075 part by weight of Sumecton SA as an inorganic layer compound. The resulting mixture was referred to as "inorganic colloid liquid dispersion (2)".

Hydrophilic resin solution (2): The same procedure as in the preparation of the hydrophilic resin solution (1) was followed except that PVA 403 was used in place of PVA 217. The resulting solution was referred to as "hydrophilic resin solution (2)".

The same procedure as in Example 1 was repeated except that the inorganic colloid liquid dispersion (2) and the hydrophilic resin solution (2) were used respectively in place of the inorganic colloid liquid dispersion (1) and the hydrophilic resin solution (1). The film thus obtained was evaluated and the results are shown in Table 1.

Example 3

Hydrophilic resin solution (3): The same procedure as in the preparation of the hydrophilic resin solution (2) was followed except that PVA 124 was used in place of PVA 217 and further 0.01% by weight of a fluorine-containing surfactant "DS 202" was added. The resulting solution was referred to as "hydrophilic resin solution (3).

The same procedure as in Example 1 was repeated except that the hydrophilic resin solution (3) was used in place of the hydrophilic resin solution (1). The film thus obtained was evaluated and the results are shown in Table 1.

Example 4

Base film (2): To 100 parts by weight of an ethylene-vinyl acetate copolymer (vinyl acetate content: 15% by weight, density: 0.94 g/cm$^3$, MFR: 1.1 g/10 min) were added 16.0 part by weight of the inorganic compound A, 0.35 part by weight of the hindered amine type compound A and 0.45 part by weight of the hindered amine type compound B respectively as a weather resistance imparting agent, 0.1 part by weight of the antioxidant I and 0.4 part by weight of a lubricant, and the mixture was kneaded in a Banbury mixer at 130°C for 5 minutes and then granulated with a granulator to obtain a composition pellet. This was referred to as "resin composition (1)".

Then, to 100 parts by weight of an ethylene-vinyl acetate copolymer (Evatate D2011, a trade name, mfd. by Sumitomo Chemical Co., Ltd.) were added 0.8 part by weight of the hindered amine type compound A, 0.1% by weight of the ultraviolet absorber U and 0.1% by weight of the antioxidant I, and the resulting mixture was processed in the same manner as for the resin composition (1) to obtain a pellet. This was referred to as "resin composition (2)".

A film of 100 μm thickness (middle layer: 60 μm, both outer layers: each 20 μm) was prepared by using an inflation film forming machine with the resin composition (1) as the middle layer and the resin composition (2) as the both outer layers. The film was referred to as "base film (2)".

The same procedure as in Example 1 was repeated except that the base film (2) was used in place of the base film (1). The film thus obtained was evaluated and the results are shown in Table 1.

Example 5

Base film (3): The same procedure as in Example 4 was repeated except that the inorganic compound A compounded into the resin composition (1) was replaced by 16.0 parts by weight of the inorganic compound B. The film thus obtained was referred to as "base film (3)".

The same procedure as in Example 1 was repeated except that the base film (3) was used in place of the base film (1). The film thus obtained was evaluated and the results are shown in Table 1.

Example 6

Base film (4): The same procedure as in Example 4 was repeated except that 2.0 parts by weight of the inorganic compound A and 10 parts by weight of the inorganic compound C were compounded as inorganic compounds into the resin composition (1). The film thus obtained was referred to as "base film (4)".

Then the same procedure as in Example 1 was repeated except that the base film (4) was used in place of the base film (1). The film thus obtained was evaluated and the results are shown in Table 1.

Comparative Example 1

The same procedure as in Example 1 was repeated except that the order of coating the inorganic colloid liquid dispersion and the hydrophilic resin solution was reversed. The film thus obtained was evaluated and the results are shown in Table 1.

Comparative Example 2

The same procedure as in Example 1 was repeated except that no hydrophilic resin solution was coated. The film thus obtained was evaluated and the results are shown in Table 1.

Example 7

Base film (5): The same procedure as in Example 4 was followed except that the inorganic compound A compounded into the resin composition (1) was replaced by 16 parts by weight of the inorganic compound D. The film thus obtained was referred to as "base film (5)".

Then the same procedure as in Example 1 was repeated except that the base film (5) was used in place of the base film (1) and the hydrophilic resin solution (2) was used in place of the hydrophilic resin solution (1). The film thus obtained was evaluated and the results are shown in Table 1.

Example 8

Inorganic colloid liquid dispersion (3): To 100 parts by weight of water were added 9 parts by weight of colloidal alumina, 2.4 parts by weight of the colloidal silica 3, 0.015 part by weight of sodium caprylate as an anionic surfactant, 0.002 part by weight of sodium p-toluenesulfonate as an organic electrolyte and 0.09 part by weight of Sumecton SA as a clay mineral. The resulting mixture was referred to as "inorganic colloid liquid dispersion (3)".

The same procedure as in Example 4 was repeated except that the inorganic colloid liquid dispersion (3) was used in place of the inorganic colloid liquid dispersion (1) and the hydrophilic resin solution (2) in place of the hydrophilic resin solution (1). The film thus obtained was evaluated and the results are shown in Table 1.

Example 9

Base film (6): The same procedure as in the preparation of the resin composition (1) of Example 4 was followed except that the amount of the inorganic compound A was changed to 12 parts by weight. The resulting resin composition was referred to as "resin composition (3)".

Then, the same procedure as in the preparation of the resin composition (2) of Example 4 was followed except that the resin used was changed to a low density polyethylene (Sumikathene F208-0, a trade name, mfd. by Sumitomo Chemical Co., Ltd.). The resulting resin composition was referred to as "resin composition (4)".

As inflation film of 100 μm thickness (3 kinds - 3 layer film, intermediate layer thickness: 65 μm, inner layer thickness: 17.5 μm, outer layer thickness: 17.5 μm) was prepared by using an inflation film forming machine with the resin composition (3) as the intermediate layer, the resin composition (4) as the inner layer and the resin composition (2) as the outer layer. The film obtained was referred to as the base film (6).

Then the same procedure as in Example 8 was repeated except that the base film (6) was used in place of the base film (2). Inorganic colloid liquid dispersion (3) and hydrophilic resin solution (2) were coated on the outer layer of the base film (6). The film thus obtained was evaluated and the results are shown in Table 1.

Example 10

The same procedure as in Example 8 was repeated except that the microgravure roll having 105 μm grid (150 Mesh) were used when the inorganic colloid liquid dispersion was coated and that the coating were carried out so as to be about 3 g/m$^2$ of the coating amount. The film thus obtained was evaluated and results are shown in Table 1.

Example 11

The same procedure as in Example 8 was repeated except that the microgravure roll having 500 μm grid (30 Mesh) were used when the inorganic colloid liquid dispersion was coated and that the coating were carried out so as to be about 15 g/m$^2$ of the coating amount. The film thus obtained was evaluated and results are shown in Table 1.

Example 12

The same procedure as in Example 8 was repeated except that the microgravure roll having 105 μm grid (150 Mesh) were used when the hydrophilic resin solution was coated and that the coating were carried out so as to be about 3 g/m$^2$ of the coating amount. The film thus obtained was evaluated and results are shown in Table 1.

Example 13

The same procedure as in Example 8 was repeated except that the microgravure roll having 500 μm grid (30 Mesh) were used when the hydrophilic resin solution was coated and that the coating were carried out so as to be about 15 g/m$^2$ of the coating amount. The film thus obtained was evaluated and results are shown in Table 1.

The colloidal alumina, colloidal silica, surfactant, organic electrolyte, inorganic layer compound, lubricant, inorganic compound, hindered amine type compound, ultraviolet absorber and antioxidant used in Examples are as follows.

Colloidal alumina: Aluminasol 520 (a trade name, mfd. by Nissan Kagaku Kogyo K.K.) (dispersion medium: water, alumina particle content: 20% by weight)

Colloidal silica A: Snowtex 20 (a trade name, mfd. by Nissan Kagaku Kogyo K.K.) (dispersion medium: water, silica particle content: 20% by weight)

Colloidal silica B: Snowtex XS (a trade name, mfd. by Nissan Kagaku Kogyo K.K.) (dispersion medium: water, silica particle content: 20% by weight)

Sodium p-toluenesulfonate: reagent grade, mfd. by Nacalai tesque Ltd.

Sodium caprylate: reagent grade, mfd. by Tokyo Kasei K.K.

Sumecton SA: a trade name, synthetic smectite, mfd. by Kunimine Kogyo K.K.

PVA 217: mfd. by Kuraray, saponification degree: 88%, polymerization degree: 1700

PVA 403: mfd. by Kuraray, saponification degree: 80%, polymerization degree: 300

PVA 124: mfd. by Kuraray, saponification degree: 98.5%, polymerization degree: 2400

Fluorine-containing surfactant: DS-202, a trade name, mfd. by Daikin Kogyo K.K.

Inorganic compound A: Mizukalac, a trade name, mfd. by Mizusawa Kagaku Kogyo K.K.

Inorganic compound B: Alkamizer, a trade name, synthetic hydrotalcite, mfd. by Kyowa Kagaku Kogyo K.K.

Inorganic compound C: Snowmark SP-3, a trade name, mfd. by Kinsei Matic Co., Ltd.
Inorganic compound D: Fujirain LS, a trade name, mfd. by Fuji Kagaku Kogyo K.K.
Hindered amine type compound A: Tinuvin 622-LD, a trade name, mfd. by Ciba-Geigy Corp.
Hindered amine type compound B: Chimasorb 944-LD, a trade name, mfd. by Ciba-Geigy Corp.
Antioxidant I: Irganox 1010, a trade name, mfd. by Ciba-Geigy Corp.
Ultraviolet absorber U: Sumisorb 130, a trade name, mfd. by Sumitomo Chemical Co., Ltd.

Table 1

| | Base film No. | Inorganic colloid liquid dispersion | Hydrophilic resin solution | Coating thickness ratio (Inorganic layer/resin layer, dry weight ($g/m^2$)) |
|---|---|---|---|---|
| Example 1 | (1) | (1) | (1) | 0.8 (0.06/0.08) |
| Example 2 | (1) | (2) | (2) | 2 (0.16/0.08) |
| Example 3 | (1) | (1) | (3) | 0.8 (0.06/0.08) |
| Example 4 | (2) | (1) | (1) | 0.8 (0.06/0.08) |
| Example 5 | (3) | (1) | (1) | 0.8 (0.06/0.08) |
| Example 6 | (4) | (1) | (1) | 0.8 (0.06/0.08) |
| Example 7 | (5) | (1) | (2) | 0.8 (0.06/0.08) |
| Example 8 | (2) | (3) | (2) | 2.4 (0.19/0.08) |
| Example 9 | (6) | (3) | (2) | 2.4 (0.19/0.08) |
| Example 10 | (1) | (3) | (2) | 0.88 (0.07/0.08) |
| Example 11 | (1) | (3) | (2) | 4.5 (0.36/0.08) |
| Example 12 | (1) | (3) | (2) | 6.3 (0.19/0.03) |
| Example 13 | (1) | (3) | (2) | 1.3 (0.19/0.15) |
| Comparative Example 1 | (1) | (1) | (1) | 0.8 (0.06/0.08) |
| Comparative Example 2 | (1) | (1) | -- | - |

- to be cont'd -

EP 0 770 658 B1

— cont'd —

| Antifog property after one month | Scratch resistance | Heat-resistant antifog property | Adhesive strength (g/cm) | Heat retaining property |
|---|---|---|---|---|
| O | O | O | 345 | – |
| O | O | O | 293 | – |
| O | O | O | 282 | – |
| O | O | O | 340 | 79 |
| O | O | O | 350 | 70 |
| O | O | O | 326 | 68 |
| O | O | O | 290 | – |
| O | O | O | 324 | – |
| O | O | O | 330 | – |
| O | O | O | 320 | – |
| O | O | O | 285 | – |
| O | O | O | 293 | – |
| O | O | O | 291 | – |
| × | × | O | 340 | 30 |
| O | × | × | 340 | – |

**Claims**

1.  An antifog film having multilayer structure, comprising

(a) a base film consisting essentially of at least one thermoplastic resin,
(b) at least one layer consisting essentially of at least one inorganic colloid, and
(c) at least one layer consisting essentially of at least one hydrophilic resin having a strongly hydrophilic polar group in the molecule

the layer (b) and the layer (c) being arranged at least on the same side of the base film (a) and the layer(s) (c) being arranged as the outermost layer(s) of the side,
wherein the layer (b) as well as layer (c) have a dry weight thickness of from 0.01 to 10 $g/m^2$ and wherein the ratio of the thickness ($d_2$) of the layer (b) to the thickness ($d_1$) of the layer (c), $d_2/d_1$, falls within the range of from 0.1 : 1 to 10 : 1.

2. The antifog film according to claim 1, wherein the layer (b) is a layer obtainable by coating an inorganic colloid liquid dispersion and drying.

3. The antifog film according to claim 1 or 2, wherein the inorganic colloid is an oxide colloid or hydroxide colloid of at least one metal selected from silicon, aluminum, zinc, magnesium, calcium, barium, titanium, zirconium, manganese, iron, nickel and tin.

4. The antifog film according to claim 3, wherein the metal is aluminum or silicon.

5. The antifog film according to any of claims 1 to 4, wherein the polar group weight fraction of the hydrophilic resin falls within the range of from 25 to 70%.

6. The antifog film according to any of claims 1 to 5, wherein the layer (c) is obtainable by coating a solution comprising as the main component at least one hydrophilic resin having a polar group weight fraction of from 25 to 70%, and drying.

7. The antifog film according to claim 5 or 6, wherein the hydrophilic resin is poly(vinyl alcohol).

8. The antifog film according to any of claims 1 to 7, wherein the surface tension of at least one surface of the base film (a) is 36 mN/m (dyne/cm) or more.

9. The antifog film according to any of claims 1 to 8, wherein the base film (a) contains from 0.03 to 25 parts by weight of an inorganic compound relative to 100 parts by weight of the thermoplastic resin.

10. The antifog film according to claim 9, wherein the inorganic compound is represented by the formula (1)

$$Li^+(A\ell^{3+})_2(OH)_6 \bullet (A^{n-})_{1/n} \bullet mH_2O \qquad (1)$$

wherein $A^{n-}$ is an n-valent anion and m is a number defined by the equation: $0 \leqq m \leqq 3$.

11. The antifog film according to claim 9, wherein the inorganic compound is a hydrotalcite group compound.

12. The antifog film according to any one of claims 1-11, wherein the base film (a) further contains from 0.02 to 5 parts by weight of a hindered amine type compound relative to 100 parts by weight of the thermoplastic resin.

13. The antifog film according to any one of claims 1-12, wherein the base film (a) further contains from 0.01 to 5 parts by weight of an ultraviolet absorber relative to 100 parts by weight of the thermoplastic resin.

**Patentansprüche**

1. Antibeschlagfolie mit einer Mehrschichtstruktur, umfassend

(a) eine im wesentlichen aus mindestens einem thermoplastischen Harz bestehende Grundfolie,
(b) mindestens eine im wesentlichen aus mindestens einem anorganischen Kolloid bestehende Schicht, und

(c) mindestens eine im wesentlichen aus einem hydrophilen Harz mit einer stark hydrophilen, polaren Gruppe im Molekül bestehende Schicht,

wobei die Schicht (b) und die Schicht (c) mindestens auf der gleichen Seite der Grundfolie (a) angeordnet sind und die Schicht(en) (c) als Außenschicht(en) der Seite angeordnet ist (sind), wobei die Schicht (b) sowie die Schicht (c) eine Dicke der Trockenmasse von 0,01 bis 10 $g/m^2$ aufweist und wobei das Verhältnis Dicke ($d_2$) der Schicht (b) zu Dicke ($d_1$) der Schicht (c) $d_2/d_1$ im Bereich von 0,1 : 1 bis 10 : 1 liegt.

**2.** Antibeschlagfolie gemäß Anspruch 1, wobei die Schicht (b) eine durch Auftragen einer flüssigen, anorganischen Kolloiddispersion und Trocknen erhältliche Schicht ist.

**3.** Antibeschlagfolie gemäß Anspruch 1 oder 2, wobei das anorganische Kolloid ein Oxidkolloid oder Hydroxidkolloid mindestens eines Metalls, ausgewählt aus Silicium, Aluminium, Zink, Magnesium, Calcium, Barium, Titan, Zirkonium, Mangan, Eisen, Nickel und Zinn, ist.

**4.** Antibeschlagfolie gemäß Anspruch 3, wobei das Metall Aluminium oder Silicium ist.

**5.** Antibeschlagfolie gemäß einem der Ansprüche 1 bis 4, wobei der Gewichtsanteil der polaren Gruppe des hydrophilen Harzes im Bereich von 25 bis 70% liegt.

**6.** Antibeschlagfolie gemäß einem der Ansprüche 1 bis 5, wobei die Schicht (c) durch Auftragen einer Lösung, umfassend als Hauptbestandteil mindestens ein hydrophiles Harz mit einem Gewichtsanteil der polaren Gruppe von 25 bis 70%, und Trocknen erhältlich ist.

**7.** Antibeschlagfolie gemäß Anspruch 5 oder 6, wobei das hydrophile Harz Poly(vinylalkohol) ist.

**8.** Antibeschlagfolie gemäß einem der Ansprüche 1 bis 7, wobei die Oberflächenspannung von mindestens einer Oberfläche der Grundfolie (a) 36 mN/m (dyne/cm) oder mehr beträgt.

**9.** Antibeschlagfolie gemäß einem der Ansprüche 1 bis 8, wobei die Grundfolie (a) 0,03 bis 25 Gewichtsteile einer anorganischen Verbindung, bezogen auf 100 Gewichtsteile thermoplastisches Harz, enthält.

**10.** Antibeschlagfolie gemäß Anspruch 9, wobei die anorganische Verbindung durch die Formel (1)

$$Li^+(Al^{3+})_2(OH)_6 \cdot (A^{n-})_{1/n} \cdot mH_2O \tag{1}$$

dargestellt ist, wobei $A^{n-}$ ein n-wertiges Anion ist und m eine durch die Gleichung $0 \leq m \leq 3$ definierte Zahl ist.

**11.** Antibeschlagfolie gemäß Anspruch 9, wobei die anorganische Verbindung eine Hydrotalcitverbindung ist

**12.** Antibeschlagfolie gemäß einem der Ansprüche 1 bis 11, wobei die Grundfolie (a) weiter 0,02 bis 5 Gewichtsteile einer gehinderten aminartigen Verbindung, bezogen auf 100 Gewichtsteile thermoplastisches Harz, enthält.

**13.** Antibeschlagfolie gemäß einem der Ansprüche 1 bis 12, wobei die Grundfolie (a) weiter 0,01 bis 5 Gewichtsteile eines Ultraviolettabsorptionsmittels, bezogen auf 100 Gewichtsteile thermoplastisches Harz, enthält.

**Revendications**

**1.** Film antibuée ayant une structure multicouche, comprenant :

(a) un film de base composé essentiellement d'au moins une résine thermoplastique ;
(b) au moins une couche composée essentiellement d'au moins un colloïde inorganique ; et
(c) au moins une couche composée essentiellement d'au moins une résine hydrophile ayant un groupe polaire fortement hydrophile dans la molécule ;

la couche (b) et la couche (c) étant disposées au moins sur le même côté du film de base (a) et la ou les couches (c) étant disposées comme la ou les couches les plus à l'extérieur du côté,

dans laquelle la couche (b), ainsi que la couche (c), ont une épaisseur pour un poids sec allant de 0,01 à 10 g/m$^2$ et dans laquelle le rapport de l'épaisseur (d$_2$) de la couche (b) à l'épaisseur (d$_1$) de la couche (c), d$_2$/d$_1$, se trouve dans la gamme de 0,1:1 à 10:1.

2. Film antibuée selon la revendication 1, dans lequel la couche (b) est une couche que l'on peut obtenir en déposant une dispersion liquide colloïde inorganique et en séchant.

3. Film antibuée selon la revendication 1 ou 2, dans lequel le colloïde inorganique est un colloïde d'oxyde ou un colloïde d'hydroxyde d'au moins un métal choisi parmi le silicium, l'aluminium, le zinc, le magnésium, le calcium, le baryum, le titane, le zirconium, le manganèse, le fer, le nickel et l'étain.

4. Film antibuée selon la revendication 3, dans lequel le métal est l'aluminium ou le silicium.

5. Film antibuée selon l'une quelconque des revendications 1 à 4, dans lequel la fraction pondérale du groupe polaire de la résine hydrophile se trouve dans la gamme de 25 à 70%.

6. Film antibuée selon l'une quelconque des revendications 1 à 5, dans lequel la couche (c) peut être obtenue en revêtant une solution comprenant comme composant principal au moins une résine hydrophile ayant une fraction pondérale de groupe polaire dans la gamme de 25 à 70% et en séchant.

7. Film antibuée selon la revendication 5 ou 6, dans lequel la résine hydrophile est le poly(alcool vinylique).

8. Film antibuée selon l'une quelconque des revendications 1 à 7, dans lequel la tension superficielle d'au moins une surface du film de base (a) est de 36 mN/m (dyne/cm) ou plus.

9. Film antibuée selon l'une quelconque des revendications 1 à 8, dans lequel le film de base (a) contient de 0,03 à 25 parties en poids d'un composé inorganique par rapport à 100 parties en poids de la résine thermoplastique.

10. Film antibuée selon la revendication 9, dans lequel le composé inorganique est représenté par la formule (1) :

$$Li^+(Al^{3+})_2(OH)_6 \bullet (A^{n-})_{1/n} \bullet mH_2O \qquad (1)$$

dans laquelle A$^{n-}$ est un anion n-valent et m est un nombre défini par l'équation : 0 ≤ m ≤ 3.

11. Film antibuée selon la revendication 9, dans lequel le composé inorganique est un composé du groupe hydrotalcite.

12. Film antibuée selon l'une quelconque des revendications 1 à 11, dans lequel le film de base (a) contient de plus de 0,02 à 5 parties en poids d'un composé de type amine encombrée par rapport à 100 parties en poids de la résine thermoplastique.

13. Film antibuée selon l'une quelconque des revendications 1 à 12, dans lequel le film de base (a) contient de plus de 0,01 à 5 parties en poids d'un absorbant ultraviolet par rapport à 100 parties en poids de la résine thermoplastique.

# FIG. 1